# EUROPÄISCHE PATENTSCHRIFT

(11) **EP 0 577 680 B1**
(45) Veröffentlichungstag und Bekanntmachung des Hinweises auf die Patenterteilung: **18.10.1995**
(21) Anmeldenummer: 92907506.7
(22) Anmeldetag: 19.03.1992
(51) Int. Cl.: B29C 47/68, B01D 29/66

(54) **FILTRIERVORRICHTUNG FÜR ZU REINIGENDE FLUIDE**
FILTERING DEVICE FOR FLUIDS TO BE PURIFIED
DISPOSITIF DE FILTRAGE DE FLUIDES A NETTOYER

(30) Priorität: 25.03.1991 AT 656/91
(43) Veröffentlichungstag der Anmeldung: 12.01.1994
(73) Patentinhaber: EREMA Engineering Recycling Maschinen und Anlagen Gesellschaft m.b.H., A-4052 Ansfelden-Linz (AT)
(72) Erfinder: BACHER, Helmut, A-4600 Schleissheim (AT); SCHULZ, Helmuth, A-4490 St. Florian (AT); WENDELIN, Georg, A-4033 Linz (AT)
(74) Vertreter: Brauneiss, Leo, Dipl.Ing.
(86) Internationale Anmeldenummer: AT9200035
(87) Internationale Veröffentlichungsnummer: WO9216351

(56) Entgegenhaltungen:
- EP-A- 0 250 695
- EP-A- 0 379 966
- DE-B- 1 486 812
- DE-C- 3 840 904

## Beschreibung

Die Erfindung bezieht sich auf eine Filtriervorrichtung für zu reinigende Fluide, insbesondere für zu Extrudierzwecken bestimmtes thermoplastisches Kunststoffmaterial, mit einem Gehäuse, das eine Führung für zumindest einen Siebträgerkörper aufweist, welcher zumindest ein Siebnest trägt und in der Führung zwischen einer Betriebsstellung, einer Spülstellung und einer Siebwechselstellung hin und her bewegbar ist, wobei in der Betriebsstellung der Zustromseite des Siebnestes über zumindest einen Zuströmkanal zu reinigendes Fluid zuführbar ist und für die Abfuhr des gereinigten Fluids nach Durchtritt durch das Siebnest an der Abstromseite desselben zumindest ein Abfuhrkanal vorgesehen ist, wogegen in der Spülstellung der Zuströmkanal durch den Siebträgerkörper abgeschlossen ist und für die Ableitung in zur Betriebsstellung entgegengesetzter Richtung durch das Siebnest hindurchströmenden Fluids und der vom Siebnest hierbei gelösten Verunreinigungen zumindest ein Spülkanal vorgesehen ist, und wobei nur in der Siebwechselstellung der Siebträgerkorper aus der Führung so weit vorragt, daß das Siebnest für den Siebwechselvorgang zugänglich ist.

Solche Filtriervorrichtungen sind bekannt (z.B. EP-B 250 695). Bei diesen bekannten Vorrichtungen ist die Anordnung so getroffen, daß zwei Siebträgerkörper einander parallel angeordnet sind, um während der Spülung der Siebnester des einen Siebträgerkörpers die Versorgung des an die Filtriervorrichtung angeschlossenen Extruders od.dgl. nicht unterbrechen zu müssen. Die für die Spülzwecke verwendete gereinigte Schmelze wird hiebei der Abstromseite des gerade in der Betriebsstellung befindlichen Siebträgerkörpers entnommen. Hiebei ist der Rückspüleffekt (Reinigungseffekt) in wesentlichen durch die Strömungsgeschwindigkeit des Rückspülstromes bestimmt, welcher seinerseits wieder abhängt vom Rückdruck des abstromseitig an die Filtriervorrichtung angeschlossenen Werkzeuges (z.B. des Extruderkopfes). Dieser Rückdruck ist in der Regel relativ niedrig und nicht beliebig beeinflußbar. Dies bewirkt ein schlechtes oder - vor allem bei größeren Siebflächen - nur partielles Freispülen der verschmutzten Siebe. Außerdem entsteht ein Masseverlust im Hauptstrom zum Zeitpunkt des Rückspülens, der umso größer ist, je länger die Zeitdauer ist, die für eine genügende Spülung des Siebnestes bzw. der Siebnester des gerade in der Spülstellung befindlichen Siebträgerkörpers erforderlich ist.

Es ist auch bereits vorgeschlagen worden, zwischen zwei unbeweglichen Siebträgerkörpern einen Drehschieber anzuordnen, durch welchen die Umstellung zwischen Normalbetrieb und Spülbetrieb erfolgt. Beim Spülbetrieb wird durch einen Kolben, der in eine Erweiterung des Abströmkanales eintritt, gereinigtes Fluid von der Abstromseite her durch das Sieb gedrückt. Da hiebei der zum Extruder führende Abstromkanal offen bleibt, kann das Fluid durch diesen Abstromkanal entweichen, sodaß für den Rückspülvorgang nur ein verhältnismäßig niedriger Rückdruck zur Verfügung steht. Die zuvor erwähnten Nachteile können daher auch durch diese Konstruktion kaum behoben werden.

Aus der EP-A-379 966 ist eine Siebvorrichtung zur Reinigung von Kunststoffschmelzen bekannt, bei welcher in einem Gehäuse eine Platte drehbar gelagert ist, die mit mehreren Durchbrüchen versehen ist, in denen jeweils Siebscheiben angeordnet sind. Ein Durchbruch liegt in allen Drehstellungen der Platte innerhalb des Gehäuses und ist in dieser Lage mit einem Rückspülkanal in Verbindung, der durch eine Absperreinrichtung wahlweise freigebbar oder absperrbar ist. In der Freigabestellung dieses Absperrorganes kann eine mit dem Rückspülkanal verbundene, im Gehäuse angeordnete Zylinderkammer mit gereinigtem Kunststoff aufgefüllt werden, aus welcher Kammer nach Überführen des Absperrorganes in seine Schließstellung der Kunststoff durch einen Kolben in Rückspülrichtung durch das betreffende Sieb hindurchgedrückt werden kann. In den darauffolgenden Drehstellung der Platte gelangt das Sieb in den Bereich eines Gehäuseausschnittes, sodaß ein Siebwechsel möglich ist. Eine solche Konstruktion vermeidet zwar den Nachteil eines Druckabfalles im Hauptstrom zum Zeitpunkt des Rückspülens, hat jedoch den Nachteil, daß jedes Sieb nach Abschluß des Rückspülvorganges in den Bereich des Gehäuseausschnittes gelangt, sodaß die vom Rückspülvorgang herrührende, im Sieb befindliche Restschmelze belüftet wird. Dies führt zu einer Oxydation des heißen Kunststoffes und es wird dieser minderwertige Kunststoff in den Hauptstrom eingebracht, sobald das betreffende Sieb wieder in den Bereich des Durchflußkanales kommt. Dadurch entsteht eine zeitweise Beeinträchtigung der Qualität der Schmelze im Hauptstrom.

Die Erfindung setzt sich zur Aufgabe, bei Bebehaltung der eingangs beschriebenen Bauweise diese Nachteile zu vermeiden und den Rückspüleffekt wesentlich zu verbessern, zugleich aber auch den Masseverlust im Hauptstrom zum Zeitpunkt des Rückspülens und einen Zutritt von Umgebungsluft zu den Siebnestern aller Siebträgerkörper sowohl in der Spülstellung als auch in der Betriebsstellung zu vermeiden. Die Erfindung löst diese Aufgabe dadurch, daß im Siebträgerkörper von der Abstromseite des Siebnestes, welches von einer zwischen zwei Lochplatten gehaltenen Filtrierlage gebildet ist, ein Vorratsraum oder ein zu einem solchen führender Kanal abzweigt, welcher Vorratsraum gereinigtes Fluid für den Spülvorgang aufnimmt, für dessen Durchdrückung beim Spülvorgang in Rückspülrichtung durch das Siebnest zumindest ein in den Vorratsraum eindringender Kolben vorhanden ist, wobei in der Spülstellung des Siebträgerkörpers auch der Abfuhrkanal durch den Siebträgerkörper abgeschlossen ist. Dieser Vorratsraum kann zu beliebiger Zeit die für den Spülvorgang benötigte Menge gereinigten Fluides aufnehmen, vorzugsweise jedoch erst unmittelbar vor dem Spülvorgang, um eine nachteilige thermische Beeinflussung des Fluides, z.B. eine Vercrackung, zu vermeiden. Für die Bereitstellung dieser zu Spülzwecken dienenden Fluidmenge im Vorratsraum ist es lediglich erforderlich, den Kolben im Vorratsraum zurückzuziehen und dadurch Fluid in den Vorratsraum anzusaugen, bis dieser hinreichend gefüllt ist. Dies kann erfolgen, solange noch das zu reinigende Filter sich in der Betriebsstellung befindet, so daß also der Vorratsraum mit Fluid gefüllt wird, welches von der Abstromseite des zu reinigenden Filters zuströmt. Es braucht daher die für den Spülvorgang benötigte Fluidmenge nicht mehr dem gereinigten Fluidstrom vom parallelgeschalteten Siebträgerkörper entnommen zu werden, so daß im Hauptstrom zum Zeitpunkt des Rückspülens kein zusätzlicher Masseverlust entsteht. Auch der Masseverlust zum Zeitpunkt der Auffüllung des Vorratsraumes ist vernachlässigbar gering, wenn die Zurückziehung des Kolbens im Vorratsraum entsprechend langsam erfolgt, was problemlos möglich ist. Vor allem aber ermöglicht es der Umstand, daß das im Vorratsraum befindliche Fluidvolumen durch den Abschluß des Abführkanals durch vorausgehendes Verschieben des Siebträgerkörpers in die Spülposition beim Spülvorgang mittels des Kolbens unter einen beliebigen Druck gesetzt werden kann, die Fließgeschwindigkeit des Rückspülstromes über die Rückspülkolbengeschwindigkeit bzw. über die auf den Kolben einwirkenden Kräfte beliebig und - was noch wichtiger ist - wesentlich höher zu wählen als dies bisher möglich war. Dies ergibt im Vergleich zu bekannten Konstruktionen einen wesentlich verbesserten Reinigungseffekt.

Die Erfindung ist nicht beschränkt auf das Vorhandensein eines zweiten Siebträgerkörpers, der beim Rückspülvorgang in der Betriebsstellung verbleibt und von dessen Abstromseite das für den Rückspülvorgang beim ersten Siebträgerkörper benötigte Fluidvolumen abgezweigt wird. Die Erfindung ist vielmehr auch anwendbar auf Filtriervorrichtungen mit lediglich einem einzigen Siebträgerkörper, wenn beim Rückspülvorgang eine kurzzeitige Betriebsunterbrechung der an die Filtriervorrichtung angeschlossenen Vorrichtung, z.B. des Extruders, in Kauf genommen werden kann. Dadurch, daß der Spülvorgang bei der erfindungsgemäßen Vorrichtung mit hohem Druck und daher sehr rasch und wirksam durchführbar ist, ist die Zeitdauer, während welcher die Versorgung der an die Filtriervorrichtung angeschlossenen Vorrichtung unterbrochen ist, sehr kurz, so daß gegebenenfalls überhaupt keine tatsächliche Betriebsunterbrechung auftritt. Bevorzugt ist jedoch eine Konstruktion, bei welcher zwei oder mehr Siebträgerkörper - bezogen auf den Fluidstrom - einander parallelgeschaltet sind.

Von wesentlichem Vorteil ist schließlich, daß die dem eingangs erwähnten Stand der Technik eigene Bauweise des hin- und herbeweglichen Siebträgerkörpers beibehalten wird. Dies bringt den Vorteil, daß die Siebnester aller Siebträgerkörper sowohl in der Spülstellung als auch in der Betriebsstellung ständig vom Gehäuse umschlossen und daher gegen Zutritt von Umgebungsluft geschützt sind. Dies ist von Wichtigkeit bei der Filtrierung luftempfindlicher Fluide, z.B. mancher Kunststoffsorten, die im heißen Zustand durch Luftzutritt geschädigt werden. Nur zur Erreichung der Siebwechselstellung wird der Siebträgerkörper so weit in seiner Führung verschoben, daß das zu wechselnde Siebnest zugänglich ist. Das darin befindliche Restvolumen an Fluid ist jedoch ohnedies nicht mehr verwendbar und wird entsorgt. Das neu eingesetzte Siebnest ist noch frei von Fluid und es spielt daher keine Rolle, wenn dieses Siebnest mit der Luft in Berührung steht, solange sich der Siebträgerkörper in der Siebwechselstellung befindet. Falls erforderlich, kann das gewechselte Siebnest - bevor es in die Betriebsstellung geführt wird - evakuiert werden. Es wäre auch möglich, dieses Siebnest vor seiner Einbringung in die Betriebsstellung in die Rückspülstellung zu führen und in dieser Stellung die im Sieb befindliche Luft durch aus dem Vorratsraum zugeführtes Fluid auszutreiben.

Gemäß einer bevorzugten Ausführungsform der Erfindung ist der Vorratsraum zur Gänze im Siebträgerkörper angeordnet. Dies erleichtert einerseits die Ausbildung des Vorratsraumes, da nur ein einziger Bauteil, nämlich der Siebträgerkörper, zur Herstellung des Vorratsraumes bearbeitet werden muß. Anderseits wird die Konstruktion auch einfacher zu reinigen und einfacher im Gesamtaufbau. In der Regel steht im Siebträgerkörper genügend Platz zur Aufnahme des Vorratsraumes zur Verfügung, lediglich in Sonderfällen kann ein benachbarter Gehäuseteil einen Abschnitt oder den gesamten Vorratsraum bilden, wobei dann im Siebträgerkörper ein zu diesem Vorratsraum führender Kanal vorgesehen sein muß. Die Anordnung des Vorratsraumes zur Gänze im Siebträgerkörper erleichtert es auch, bestehende Anlagen im Sinne der Erfindung umzurüsten, da lediglich der Siebträgerkörper entsprechend ausgetauscht oder nachbearbeitet werden muß.

Für die Betätigung des Kolbens im Vorratsraum zwecks Austreibung des im Vorratsraum befindlichen, zu Reinigungszwecken benötigten Fluidvolumens bestehen im wesentlichen zwei grundsätzliche Möglichkeiten: Einerseits kann gemäß einer Weiterbildung der Erfindung die Anordnung so getroffen sein, daß für den Vorschub des Kolbens ein eigener, von der Bewegung des Siebträgerkolbens unabhängiger Antrieb vorgesehen ist. Dies ermöglicht eine völlig unabhängige Bewegung von Siebträgerkolben einerseits und dem im Vorratsraum befindlichen Kolben anderseits, wenngleich in der Regel eine Abstimmung dieser beiden Bewegungen aufeinander erfolgen wird, etwa derart, daß zuerst der Siebträgerkolben in die für den Spülvorgang vorgesehene Position gebracht und dann der im Vorratsraum befindliche Kolben zwecks Durchführung des eigentlichen Spülvorganges vorgeschoben wird. Hiefür empfiehlt es sich im Rahmen der Erfindung, wenn der Antrieb, insbesondere ein doppeltwirkender Druckmittelzylinder, am Siebträgerkolben, insbesondere am Stirnende desselben, befestigt ist. Der Antrieb für den im Vorratsraum befindlichen Kolben bewegt sich dann mit dem Siebträgerkörper mit.

Die andere Variante besteht im Rahmen der Erfindung darin, daß der im Vorratsraum befindliche Kolben mit einem Anschlag seiner Kolbenstange an einem am Gehäuse, vorzugsweise abnehmbar, befestigten Gegenanschlag, vorzugsweise einem Joch, anliegt und eine in Bezug auf das Gehäuse unveränderliche Relativlage einnimmt. Der Rückspülvorgang wird hierbei lediglich über die Verschiebung des Siebträgerkolbens durchgeführt und es entfällt ein zusätzlicher, auf den Siebträgerkolben aufgesetzter Antrieb für die Bewegung des im Vorratsraum befindlichen Kolbens. Dies ergibt eine einfachere und billigere Bauweise.

In der Regel ist im Rahmen der Erfindung der Vorratsraum von einer axialen Bohrung des Siebträgerkanales gebildet, die bis zum einen Stirnende des Siebträgerkörpers reicht. Hiebei kann die Anordnung gemäß einer bevorzugten Ausführungsform der Erfindung so getroffen sein, daß die dem Siebnest zugewendete Stirnfläche des Kolbens in seiner dem Siebnest nächsten Lage mit der Wand des, in Normalflußrichtung des Fluids gesehen, hinter dem Siebnest im Siebträgerkörper liegenden Raumes abschließt. Der Rückspülkolben schließt dann formschlüssig in Bezug auf den Hauptfließkanal auf der Sauberseite des Siebnestes (Filterträgers) ab. Im Betrieb einer solchen Vorrichtung empfiehlt es sich, den Rückspülspeicher erst unmittelbar vor dem eigentlichen Rückspülvorgang aufzufüllen. Diese vermeidet tote Räume, in denen stehende, heiße Fluidanteile längere Zeit verweilen. Dies ist insbesondere bei Kunststoffschmelzen von Bedeutung, die bei längerer stärkerer Erwärmung zum thermischen Abbau neigen.

Gemäß einer vorteilhaften Weiterbildung der Erfindung weist der Antrieb des im Vorratsraum befindlichen Kolbens Steuerorgane zur Beeinflussung der Bewegung dieses Kolbens auf, z.B. ein in eine Druckmittelzuleitung des zur Bewegung des Rückspülkolbens dienenden Druckmittelzylinders eingeschaltetes Drosselrückschlagventil. Dies ermöglicht es, den Anteil der beim Auffüllen des Rückspülspeichers vom Hauptschmelzefluß abgezweigten Schmelze nach Wunsch einzustellen, ohne daß hiefür ein in den Rückspülkanal einzusetzendes, den Rückspülstrom regulierendes Drosselorgan, z.B. eine Drosseldüse, notwendig ist. Vorteilhaft ist auch, daß das im Rahmen der Erfindung zur Verwendung kommende Steuerorgan außen liegt und daher jederzeit für Einstellung, Wartung oder Ersatz leicht zugänglich ist.

In der Zeichnung sind Ausführungsbeispiele des Erfindungsgegenstandes schematisch dargestellt. Fig.1 zeigt ein erstes Ausführungsbeispiel im Schnitt in der Produktionsstellung. Fig.2 zeigt einen ähnlichen Schnitt, jedoch in der Rückspülstellung des Siebträgerkörpers. Die Fig.3 und 4 zeigen ähnliche Schnitte bei einem zweiten Ausführungsbeispiel. Die Fig.5 und 6 sind ebenfalls ähnliche Schnitte bei einem dritten Ausführungsbeispiel.

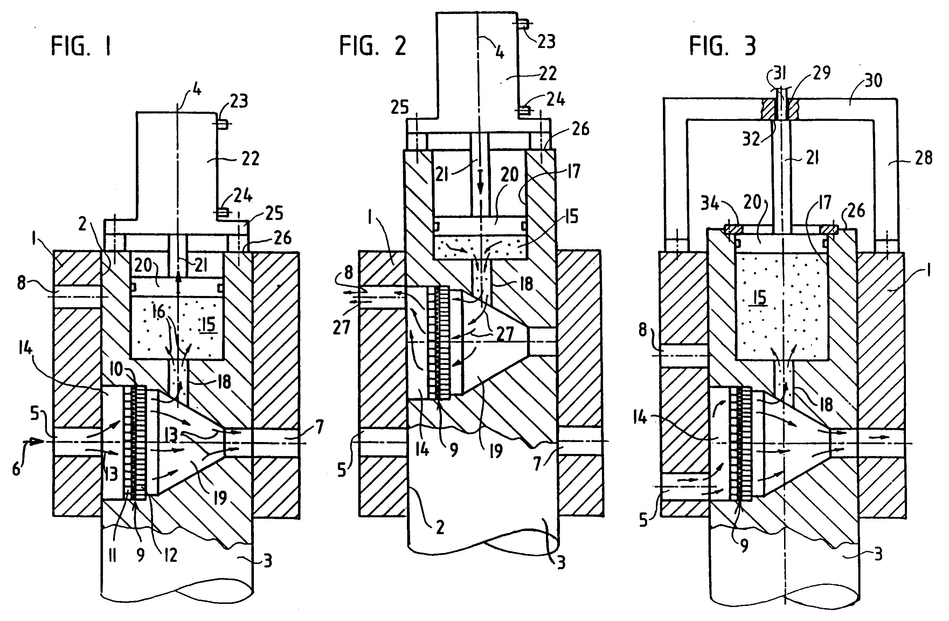

Bei der Ausführungsform nach den Fig.1 und 2 ist in einem ortsfesten Gehäuse 1 der Filtriervorrichtung in einer eine Führung 2 bildenden Bohrung ein von einem Zylinderkörper gebildeter Siebträgerkörper 3 in Richtung seiner Achse 4 verschiebbar gelagert. Im Gehäuse 1 sind ein Zuströmkanal 5 für die zu reinigende Kunststoffschmelze, die in Richtung des Pfeiles 6 zugeführt wird, sowie ein Abfuhrkanal 7 für die gereinigte Schmelze vorgesehen, weiters ein zu Rückspülzwecken benutzter Spülkanal 8. Im Normalbetrieb (Fig.1) erfolgt die Reinigung der über den Kanal 5 zugeführten Kunststoffschmelze mittels eines die Verunreinigungen ausfilternden Siebnestes 9, welches in bekannter Weise zumindest eine Filtrierlage 10 aufweist, die zwischen zwei Lochplatten 11,12 des Siebnestes 9 gehalten ist. Der Strom der durch das Siebnest 9 im Normalbetrieb strömenden Schmelze ist durch Pfeile 13 angedeutet.

In der Rückspülstellung (Fig.2) steht der - in Normalbetriebsstellung gesehen - vor dem Siebnest 9 liegende Raum 14 im Siebträgerkörper 3 mit dem Spülkanal 8 in Verbindung, was durch entsprechende Verschiebung des Siebträgerkörpers 3 in Richtung seiner Achse 4 um eine genügende Strecke erzielt wird. In der Spülstellung bzw. während der gesamten Dauer des Spülvorganges sind der Zuströmkanal 5 und der Abfuhrkanal 7 durch die Wand des Siebträgerkörpers 3 abgeschlossen. Die Spülung des Siebnestes 9 in zur Normalbetriebsstellung (Fig.1) umgekehrter Strömungsrichtung zwecks Reinigung erfolgt durch in einem Vorratsraum 15 befindliche gereinigte Schmelze, die zuvor in Richtung der Pfeile 16 (Fig.1) in den Vorratsraum 15 eingeströmt ist. Der Vorratsraum 15 ist von einer axialen Bohrung 17 im Siebträgerkörper 3 gebildet, die durch einen Kanal 18 mit dem in der Normalbetriebsstellung hinter dem Siebnest 9 liegenden Raum 19 im Trägerkörper 3 in Verbindung steht. In diesem zylinderförmigen Vorratsraum 15 ist ein Kolben 20 abgedichtet geführt, dessen Kolbenstange 21 mit der Kolbenstange eines doppeltwirkenden Druckmittelzylinders 22, vorzugsweise eines hydraulischen Zylinders, verbunden ist, dessen Druckmittelzu- bzw. -ableitungen mit 23,24 bezeichnet sind. Der Zylinder 22 ist mittels eines Flansches 25 am Stirnende 26 des Siebträgerkörpers 3 befestigt und mit diesem in Richtung der Achse 4 verschiebbar.

Soll das Siebnest 9 zwecks Reinigung rückgespült werden, so wird zunächst in der Normalbetriebsstellung (Fig.1) der Vorratsraum 15 durch Zurückziehen des Kolbens 20 mit gereinigter Schmelze aus dem Raum 19 über den Kanal 18 gefüllt. Zweckmäßig erfolgt dieses Zurückziehen des Kolbens 20 langsam, um die über den Abfuhrkanal 7 dem nachgeschalteten Extruder pro Zeiteinheit zugeführte Schmelzenmenge nicht wesentlich zu verändern. Sobald der Vorratsraum mit Schmelze gefüllt ist, wird der Siebträgerkörper 3 in Richtung der Achse 4 in die Rückspülstellung (Fig.2) geschoben und dabei der Zuströmkanal 5 und der Abfuhrkanal 7 abgeschlossen. Sobald diese Stellung erreicht ist, wird der Zylinder 22 so betätigt, daß der Kolben 20 im Vorratsraum 15 vorgeschoben wird. Die im Vorratsraum 15 befindliche Schmelzenmenge wird daher durch den Kanal 18 in den Raum 19 und in zur normalen Betriebsstellung entgegengesetzter Richtung (Pfeile 27, Fig.2) durch das Siebnest 9 gedrückt, und diese Schmelze kann nicht anders aus dem Vorratsraum 15 entweichen. Die im Siebnest 9 befindlichen Verunreinigungen werden daher vom Siebnest 9 gelöst und mittels des Schmelzenstromes durch den Spülkanal 8 abgeführt. Dies kann sehr rasch und mit hohem Druck durch entsprechende Betätigung des Kolbens 20 erfolgen, so daß das Siebnest 9 wirksam und vollständig gereinigt wird, völlig unabhängig von den Bedingungen, welche im Abfuhrkanal 7 und den daran angeschlossenen Bauteilen (Extruderkopf od.dgl.) herrschen und auch unabhängig vom Betrieb eines allfälligen parallel an den Abführkanal angeschlossenen weiteren Siebnestes. Sobald der Rückspülvorgang abgeschlossen ist, wird der Siebträgerkörper 3 wieder in die Normalbetriebsstellung (Fig.1) geführt, wobei der Kolben 20 in seiner vorgeschobenen Stellung verbleibt, die zweckmäßig so gewählt ist, daß der Kolben 20 in dieser Lage am dem Siebnest 9 benachbarten Stirnende der Bohrung 17 anliegt. Dies vermeidet unnütze, im Vorratsraum 15 zurückbleibende Schmelzenanteile, die durch langdauernde Erwärmung vercracken könnten.

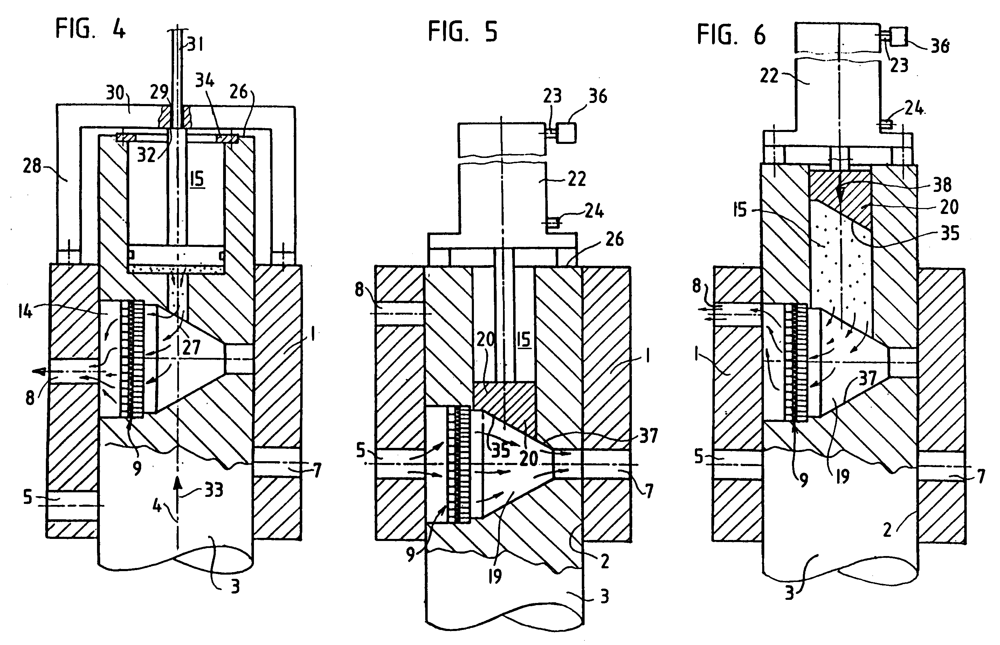

Die Ausführungsform nach den Fig.3 und 4 unterscheidet sich von jener nach den Fig.1 und 2 im wesentlichen dadurch, daß kein eigener Antrieb (Druckmittelzylinder 22) für die Relativverschiebung des Kolbens 20 in Bezug auf den Siebträgerkörper 3 vorgesehen ist. Statt dessen ist am Gehäuse 1 ein Joch 28 abnehmbar befestigt, welches eine Öffnung 29 im Querteil 30 hat, durch die eine mit verringertem Durchmesser ausgebildete Verlängerung 31 der Kolbenstange 21 hindurchgreift und derart den Kolben 20 zentriert in Bezug auf die den Vorratsraum 15 begrenzende Bohrung 17 hält. Der Übergang zwischen der Verlängerung 31 und der Kolbenstange 21 bildet einen Anschlag 32, welcher ständig am einen Gegenanschlag bildenden Querteil 30 des Joches 28 anliegt. Der Anschlag 32 kann gegebenenfalls an diesem Querteil 30 befestigt sein. In der in Fig.3 dargestellten Normalbetriebsstellung befindet sich der Siebträgerkörper 3 in seiner vom Querteil 30 des Joches 28 am weitesten entfernten Lage. In dieser Stellung kann - wie Fig.3 zeigt - die Anordnung so getroffen sein, daß der Zuströmkanal 5 nicht mittig, sondern am Rande auf den vor dem Siebnest 9 liegenden Raum 14 trifft. Zuströmkanal 5 und Abfuhrkanal 7 für die Schmelze liegen dann mit ihren Achsen nicht konzentrisch. Hingegen liegt in der Spülstellung (Fig.4) der Spülkanal 8 annähernd mittig in Bezug auf den Raum 14. Beim Übergang von der Normalbetriebsstellung (Fig.3) in die Spülstellung (Fig.4) wird der Siebträgerkörper 3 in Richtung seiner Achse 4 in Richtung des Pfeiles 33 (Fig.4) verschoben. Dabei werden der Zuströmkanal 5 und der Abfuhrkanal 7 abgeschlossen und das Stirnende 26 des Siebträgerkörpers nähert sich dem Querteil 30 des Joches 28. Hiebei wird der in der Stellung nach Fig.3 nahe dem Stirnende 26 liegende Kolben 20 in den Vorratsraum 15 hineingedrückt und treibt die im Vorratsraum befindliche Schmelze in Richtung der Pfeile 27 in Spülrichtung durch das Siebnest 9 und in den Spülkanal 8 (Fig.4). Wenn das zu reinigende Fluid inkompressibel ist, was in der Regel der Fall ist, so muß die Relativanordnung des Zuströmkanales 5, des Spülkanales 8 und des Raumes 14 derart getroffen sein, daß der Spülkanal 8 in Verbindung mit dem Raum 14 tritt, sobald der Zuströmkanal 5 abgeschlossen ist, um einen Bruch durch Aufbau eines übermäßigen Druckes beim Spülvorgang zu vermeiden. Ein am Stirnende 26 des Siebträgerkörpers 3 befestigter Ring 34 verhindert, daß der Kolben 20 aus dem Vorratsraum 15 austreten kann.

Bei der Ausführungsform nach den Fig.5 und 6 ist wieder ein Druckmittelzylinder 22 am Stirnende 26 des Siebträgerkörpers 3 befestigt. Es entfällt hier der Kanal 18 (Fig.1,2) und es ist der im Vorratsraum 15 befindliche Kolben 20 mit seiner dem Raum 19 zugewandten Stirnfläche 35 derart ausgebildet, daß diese Stirnfläche 35 stufenlos in die benachbarte Wand 37 des Raumes 19 in der Stellung des Kolbens 20 nach Fig.5 übergeht. Auf diese Weise ergibt sich im Hauptschmelzenfluß im Normalbetrieb (Fig.5) nicht die geringste Störung und es läßt sich der Vorratsraum 15 als mit einheitlichem Durchmesser gerade gebohrter Kanal ausführen. Die Wand 37 konvergiert zweckmäßig abstromseitig gegen den Abführkanal 7 zu, um von der verhältnismäßig großen Fläche des Siebnestes 9 auf einen geringeren Durchmesser des Abführkanales 7 überzugehen.

Der Anteil der bei der Auffüllung des vom Vorratsraum 15 gebildeten Rückspülspeichers vom Hauptschmelzefluß abgezweigten Schmelze kann über ein Drosselventil 36 eingestellt werden, welches zweckmäßig als Drosselrückschlagventil ausgebildet ist. Es erlaubt eine stufenlose Einstellung des abgezeigten Rückspülstromes zur Auffüllung des Vorratsraumes 15 und damit eine optimale Anpassung an unterschiedliche Produktionsrestriktionen und Schmelzeviskositäten.

Auch bei der Ausführungsform nach den Fig.5 und 6 wird, bevor der Siebträgerkörper 3 in die Rückspülstellung (Fig.6) verschoben wird, der Kolben 20 aus der in Fig.5 dargestellten Stellung zurückgezogen, so daß sich der Vorratsraum 15 mit für den Spülvorgang benötigter Schmelze füllen kann. Erst dann erfolgt die Verschiebung des Siebträgerkörpers 3 in die in Fig.6 dargestellte Lage (Rückspülstellung), wonach durch Vorschub des Kolbens 20 in Richtung des Pfeiles 38 (Fig.6) der Rückspülvorgang beginnt. Sobald der Kolben 20 mit seiner Stirnfläche wieder bündig mit der Begrenzungsfläche des Raumes 19 abschließt, wird der Siebträgerkörper 3 wieder in die in Fig.5 dargestellte normale Betriebsstellung zurückgeführt.

Bei allen Ausführungsformen lassen sich die Siebnester leicht ausbauen, wenn der Siebträgerkörper 3 aus seiner ihn führenden Bohrung 2 so weit vorgeschoben wird, daß das Siebnest 9 aus dem Gehäuse 1 hervorragt und daher für den Siebwechselvorgang leicht zugänglich ist. Wie ersichtlich, könnte die Verschiebung des Siebträgerkörpers 3 in die Siebwechselstellung bei den Ausführungsformen nach den Fig.1 und 2 bzw. 5 und 6 sowohl nach oben als auch nach unten erfolgen. Lediglich bei der Ausführungsform nach Fig.3 und 4 müßte zuerst das Joch 28 vom Gehäuse 1 gelöst werden, um eine entsprechend weite Verschiebung des Siebträgerkörpers 3 nach oben zuzulassen. Nach unten wäre eine Verschiebung in die Siebwechselstellung problemlos möglich. Wie ersichtlich, sind bei allen Ausführungsformen in allen Betriebsstellungen mit Ausnahme der Siebwechselstellung das Siebnest 9 sowie die mit ihm zusammenwirkenden Kanäle vollkommen vom Gehäuse 1 umschlossen, so daß dort kein Luftzutritt erfolgen kann. Die in der Vorrichtung fließende Schmelze ist daher gegen Luftzutritt geschützt.

Wie ersichtlich, ist die Erfindung auch auf solche Filtriervorrichtungen anwendbar, bei welchen in einem Siebträgerkörper 3 zwei oder gegebenenfalls sogar mehr Siebnester 9 vorgesehen sind. In gleicher Weise ist die Anwendung der Erfindung möglich auf Konstruktionen, bei welchen in einem gemeinsamen Gehäuse 1 zwei oder mehr Siebträgerkörper 3 verschiebbar gelagert sind, deren Räume 19 in einen gemeinsamen, zur angeschlossenen Anlage führenden Abfuhrkanal 7 fördern. Diese Anlage kann ein Extruder für thermoplastisches Kunststoffmaterial sein, jedoch auch eine andersgeartete Anlage, welche gereinigtes Fluid benötigt, wenngleich sich die Erfindung in erster Linie für die Reinigung von Schmelzen aus thermoplastischem Kunststoffmaterial eignet.

## Patentansprüche

1. Filtriervorrichtung für zu reinigende Fluide, insbesondere für zu Extrudierzwecken bestimmtes thermoplastisches Kunststoffmaterial, mit einem Gehäuse (1), das eine Führung für zumindest einen Siebträgerkörper (3) aufweist, welcher zumindest ein Siebnest (9) trägt und in der Führung zwischen einer Betriebsstellung, einer Spülstellung und einer Siebwechselstellung hin- und herbewegbar ist, wobei in der Betriebsstellung der Zustromseite des Siebnestes (9) über zumindest einen Zuströmkanal (5) zu reinigendes Fluid zuführbar ist und für die Abfuhr des gereinigten Fluids nach Durchtritt durch das Siebnest (9) an der Abströmseite desselben zumindest ein Abfuhrkanal (7) vorgesehen ist, wogegen in der Spülstellung der Zuströmkanal (5) durch den Siebträgerkörper (3) abgeschlossen ist und für die Ableitung in zur Betriebsstellung entgegengesetzter Richtung durch das Siebnest (9) hindurchströmenden Fluids und der vom Siebnest (9) hierbei gelösten Verunreinigungen zumindest ein Spülkanal (8) vorgesehen ist, und wobei nur in der Siebwechselstellung der Siebträgerkörper (3) aus der Führung so weit vorragt, daß das Siebnest (9) für den Siebwechselvorgang zugänglich ist, dadurch gekennzeichnet daß im Siebträgerkörper (3) von der Abstromseite des Siebnestes (9), welches von einer zwischen zwei Lochplatten (11,12) gehaltenen Filtrierlage (10) gebildet ist, ein Vorratsraum (15) oder ein zu einem solchen führender Kanal (18) abzweigt, welcher Vorratsraum (15) gereinigtes Fluid für den Spülvorgang aufnimmt, für dessen Durchdrückung beim Spülvorgang in Rückspülrichtung durch das Siebnest (9) zumindest ein in den Vorratsraum (15) eindringender Kolben (20) vorhanden ist, wobei in der Spülstellung des Siebträgerkörpers auch der Abfuhrkanal (7) durch den Siebträgerkörper (3) abgeschlossen ist.

2. Filtriervorrichtung nach Anspruch 1, dadurch gekennzeichnet, daß der Vorratsraum (15) zur Gänze im Siebträgerkörper (3) angeordnet ist.

3. Filtriervorrichtung nach Anspruch 1 oder 2, dadurch gekennzeichnet, daß für den Vorschub des Kolbens (20) ein eigener, von der Bewegung des Siebträgerkörpers (3) unabhängiger Antrieb vorgesehen ist, vorzugsweise ein Druckmittelzylinder (22), dessen Kolbenstange (21) mit dem im Vorratsraum (15) befindlichen Kolben (20) verbunden ist.

4. Filtriervorrichtung nach Anspruch 3, dadurch gekennzeichnet, daß der Antrieb, insbesondere ein doppeltwirkender Druckmittelzylinder (22), am Siebträgerkörper (3),insbesondere am Stirnende (26) desselben, befestigt ist.

5. Filtriervorrichtung nach Anspruch 3 oder 4, dadurch gekennzeichnet, daß der Antrieb Steuerorgane zur Beeinflussung der Bewegung des Kolbens (20) aufweist, vorzugsweise ein in eine Druckmittelzuleitung (23) des Druckmittelzylinders (22) eingeschaltetes Drosselrückschlagventil (36).

6. Filtriervorrichtung nach Anspruch 1 oder 2, dadurch gekennzeichnet, daß der im Vorratsraum (15) befindliche Kolben (20) mit einem Anschlag (32) seiner Kolbenstange (21) an einem am Gehäuse (1), vorzugsweise abnehmbar, befestigten Gegenanschlag, vorzugsweise einem Joch (28), anliegt und eine in Bezug auf das Gehäuse (1) unveränderliche Relativlage einnimmt.

7. Filtriervorrichtung nach einem der Ansprüche 1 bis 6, dadurch gekennzeichnet, daß die dem Siebnest (9) zugewendete Stirnfläche (35) des Kolbens (20) in seiner dem Siebnest (9) nächsten Lage mit der Wand (37) des, in Normalflußrichtung des Fluids gesehen, hinter dem Siebnest (9) liegenden Raumes (19) abschließt.

8. Filtriervorrichtung nach Anspruch 7, dadurch gekennzeichnet, daß diese Wand (37) gegen die Abstromseite zu konvergiert.

9. Filtriervorrichtung nach einem der Ansprüche 1 bis 8, dadurch gekennzeichnet, daß der Vorratsraum (15) von einer axialen Bohrung (17) des Siebträgerkörpers (3) gebildet ist, die bis zum einen Stirnende (26) des Siebträgerkörpers (3) reicht.

## Claims

1. A filtering device for fluids to be purified, in particular for thermoplastic material intended for extrusion, comprising a housing (1) having a guide for at least one screen-carrying member (3) carrying at least one nest of screens (9) and movable back and forth between an operating position, a washing position and a screen-changing position, wherein, in the operating position, fluid to be purified can be fed to the inflow side of the nest of screens (9) via at least one inlet channel (5) and wherein at least one outlet channel (7) is provided on the outflow side of the nest of screens (9) for the discharge of the purified fluid after its passage through the said nest of screens (9), the inlet channel (5) being closed off by the screen-carrying member (3) in the washing position and at least one washing channel (8) being provided for draining off, in a direction contrary to the operating position, fluid flowing through the nest of screens (9) and the impurities thereby released from the nest of screens (9), and wherein the screen-carrying member (3) projects from the guide far enough for the nest of screens (9) to be accessible for the screen-changing operation only in the screen-changing position, characterised in that, in the screen-carrying member (3), a reservoir (15) or a channel (18) leading to such a reservoir branches off from the outflow side of the nest of screens (9) formed by a filtering layer (10) held between two perforated plates (11, 12), the said reservoir (15) containing purified fluid for the washing operation, at least one piston (20), penetrating the reservoir (15), being provided for forcing the said purified fluid through the nest of screens (9) in the backwashing direction during the washing operation, the outlet channel (7) also being closed off by the screen-carrying member (3) when the said screen-carrying member is in the washing position.

2. A filtering device according to claim 1, characterised in that the reservoir (15) is arranged entirely in the screen-carrying member (3).

3. A filtering device according to claim 1 or 2, characterised in that a separate drive, preferably a pressure cylinder (22), independent of the movement of the screen-carrying member (3), is provided for advancing the piston (20), the piston rod (21) of which is connected to the piston (20) located in the reservoir (15).

4. A filtering device according to claim 3, characterised in that the drive, in particular a double-acting pressure cylinder (22), is fixed to the screen-carrying member (3), in particular to the end (26) thereof.

5. A filtering device according to claim 3 or 4, characterised in that the drive has control members for controlling the movement of the piston (20), preferably a one-way restrictor (36) inserted into a pressure-medium feed pipe (23) of the pressure cylinder (22).

6. A filtering device according to claim 1 or 2, characterised in that a stop (32) on the piston rod (21) of the piston (20) in the reservoir (15) rests against a counterstop, preferably a yoke (28), fixed, preferably detachably, to the housing (1) and the said piston (20) adopts a relative position which remains constant relative to the housing (1).

7. A filtering device according to any one of claims 1 to 6, characterised in that the end (35) of the piston (20) facing the nest of screens (9), in its position nearest to the nest of screens (9), ends with the wall (37) of the chamber (19) located, when viewed in the normal flow direction of the fluid, behind the nest of screens (9).

8. A filtering device according to claim 7, characterised in that this wall (37) converges towards the outlet side.

9. A filtering device according to any one of claims 1 to 8, characterised in that the reservoir (15) is formed by an axial bore (17) of the screen-carrying member (3), the said bore (17) extending as far as one end (26) of the screen-carrying member (3).

## Revendications

1. Dispositif de filtrage de fluide à nettoyer, en particulier pour les matières premières thermoplastiques utilisées en extrusion, comprenant un corps (1) doté d'un système de guidage pour au moins un ensemble porte-filtre (3), lui-même équipé d'un filtre (9) au moins et susceptible de se déplacer alternativement dans le système de guidage entre une position de service, une position de rinçage et une position de changement de filtre, dans lequel, en position de service, le fluide à nettoyer peut arriver du côté amont du filtre (9) par un canal d'amenée (5) au moins, l'évacuation du fluide nettoyé, après avoir traversé le filtre (9) se faisant du côté aval de celle-ci par un canal d'évacuation (7) au moins, tandis qu'en position de rinçage, le canal d'amenée (5) est obturé par l'ensemble porte-filtre (3), un canal de rinçage (8) au moins étant prévu pour évacuer à travers le filtre (9), en sens contraire de celui de la position de service, le fluide qui le traverse, ainsi que les impuretés qui ont ainsi été détachées du filtre (9) et dans lequel l'ensemble porte-filtre (3) ne dépasse suffisamment du système de guidage qu'en position de changement de filtre, de manière à ce que le filtre (9) soit accessible pour l'opération de remplacement de l'élément filtrant, caractérisé en ce que, dans l'ensemble porte-filtre (3), un réservoir d'alimentation (15) ou un canal (18) conduisant à celui-ci est en dérivation sur le côté aval du filtre (9) qui est constituée par un élément filtrant (10) tenu entre deux plaques perforées (11, 12), ledit réservoir d'alimentation (15) pouvant emmagasiner une quantité de fluide nettoyé suffisante pour le processus de rinçage, ce fluide étant forcé, lors du rinçage à contre-courant, à travers le filtre (9) par un piston (20) au moins pénétrant dans le réservoir d'alimentation (15), le canal d'évacuation (7) se trouvant également obturé par l'ensemble porte-filtre (3) lorsque l'ensemble portefiltre est en position de rinçage.

2. Dispositif de filtrage selon la revendication 1, caractérisé en ce que le réservoir d'alimentation (15) tient à l'intérieur de l'ensemble porte-filtre (3).

3. Dispositif de filtrage selon les revendications 1 ou 2, caractérisé en ce que, pour le déplacement du piston (20), il est prévu un entraînement spécifique, indépendant du déplacement de l'ensemble porte-filtre (3), de préférence un vérin à pression de fluide (22), la tige de piston (21) étant reliée au piston (20) situé à l'intérieur du réservoir d'alimentation (15).

4. Dispositif de filtrage selon la revendication 3, caractérisé en ce que l'entraînement, de préférence un vérin à pression de fluide (22) à double effet, est fixé sur l'ensemble porte-filtre (3), en particulier sur l'extrémité frontale (26) de celui-ci.

5. Dispositif de filtrage selon les revendications 3 ou 4, caractérisé en ce que l'entraînement est doté d'organes de commande permettant d'agir sur le déplacement du piston (20), de préférence un clapet de retenue a étranglement (36) placé dans une conduite de pression de fluide (23) du vérin à pression de fluide (22).

6. Dispositif de filtrage selon les revendications 1 ou 2, caractérisé en ce que le piston (20) qui se trouve à l'intérieur du réservoir d'alimentation (15) est en appui, par une butée (32) de sa tige de piston (21) sur une contre-butée, constituée de préférence par un étrier (28) fixé de préférence de façon amovible sur le corps (1), le piston ayant ainsi une position relative fixe par rapport au corps (1).

7. Dispositif de filtrage selon l'une quelconque des revendications 1 à 6, caractérisé en ce que la face frontale (35) du piston (20) située du côté du filtre (9), lorsqu'elle est dans sa position la plus proche du filtre (9), ferme la paroi (37) de l'espace (19) situé en aval du filtre (9) dans le sens normal de circulation du fluide.

8. Dispositif de filtrage selon la revendication 7, caractérisé en ce que cette paroi (37) converge du côté évacuation.

9. Dispositif de filtrage selon l'une quelconque des revendications 1 à 8, caractérisé en ce que le réservoir d'alimentation (15) est formé par un alésage axial (17) de l'ensemble porte-filtre (3), qui s'étend jusqu'à l'extrémité frontale (26) de l'ensemble porte-filtre (3).
